# EUROPEAN PATENT APPLICATION

(11) **EP 2 544 036 A1**
(43) Date of publication of application: **09.01.2013**
(21) Application number: 11750161.9
(22) Date of filing: 21.02.2011
(51) Int. Cl.: G02B 19/00, F24J 2/46

(54) **SOLAR REFLECTING AND CONDENSING DEVICE USING THIN FILM**

(30) Priority: 02.03.2010 CN 201010115538
(71) Applicant: Tianjin Taiyangshen Technology Co., Ltd., Tianjin 300384 (CN)
(72) Inventor: DENG, Daren, Tianjin 300091 (CN)
(74) Representative: Intès, Didier Gérard André
(86) International application number: PCT/CN2011/071121
(87) International publication number: WO 2011/107008

(57) **Abstract**

A film solar reflecting and condensing device includes: a condensing film (2), a surface form baseplate (3) and a focusing bracket (4) of the surface form, wherein the condensing film (2) is a planar film (2a) with reflecting plating which is set on the top surface of the surface form baseplate (3); the surface form baseplate (3) is a thin plate whose bottom surface is attached to the top surface of the focusing bracket (4) of the surface form and reproduces its surface shape; the focusing bracket (4) of the surface form includes: a top optical curved surface (4a) of the focusing bracket (4) of the surface form and a focusing structure (4b) integrated with the focusing bracket of the surface form, wherein the top optical curved surface (4a) of the focusing bracket of the surface form is on the top surface of the focusing bracket (4) of the surface form and the central point of the focusing structure (4b) integrated with the focusing bracket of the surface form is at the focus (f) of the top optical curved surface (4a) of the focusing bracket of the surface form.

## Description

### BACKGROUND OF THE INVENTION

### 1. Technical Field

The present invention relates to a solar reflecting and condensing device, and more especially to a film solar reflecting and condensing device.

### 2. Description of Related Art

A solar reflecting and condensing device has three elements: a reflecting plating with an extremely high reflectance (a condensing layer); a reflecting surface form meeting optical requirements; and accurate condensing focus positioning.

As for the solar reflecting and condensing device in the prior art, most of them are manufactured in such a way that a one-piece base material is processed into an accurate surface form whose surface is polished and plated, and a light receptor is erected at the focus with a welded bracket to form a condensing device.

The condensing device in the prior art above has the following disadvantages: high material cost, difficulty in processing, inaccurate focus positioning and great inconvenience in mass production. Therefore, the condensing device above can be used only in a laboratory or exhibiting sample project. It is not applicable to large-scale generalization at all, which limits the utilization and development of the solar energy.

### BRIEF SUMMARY OF THE INVENTION

The present invention aims at providing a film solar reflecting and condensing device featuring low cost, easy manufacturing, high-precision repetition, good condensing effects and application to large-scale generalization by overcoming the disadvantages in the prior art.

The technical solution to solve the technical problems above is as below:
A film solar reflecting and condensing device, including: a condensing film, a surface form baseplate and a focusing bracket of the surface form, wherein the condensing film is a planar film with reflecting plating which is set on the top surface of the surface form baseplate; the surface form baseplate is a thin plate whose bottom surface is attached to the top surface of the focusing bracket of the surface form and reproduces its surface shape; the focusing bracket of the surface form includes: a top optical curved surface of the focusing bracket of the surface form and a focusing structure integrated with the focusing bracket of the surface form, wherein the top optical curved surface of the focusing bracket of the surface form is on the top surface of the focusing bracket of the surface form and the central point of the focusing structure integrated with the focusing bracket of the surface form is at the focus of the top optical curved surface of the focusing bracket of the surface form.

A film solar reflecting and condensing device, including: a condensing film, a surface form baseplate and a focusing bracket of the surface form, wherein the condensing film is a microprism total-reflection condensing film which is set on the top surface of the surface form baseplate; the surface form baseplate is a thin plate whose bottom surface is attached to the top surface of the focusing bracket of the surface form and reproduces its surface shape; the focusing bracket of the surface form includes: a top optical curved surface of the focusing bracket of the surface form and a focusing structure integrated with the focusing bracket of the surface form, wherein the top optical curved surface of the focusing bracket of the surface form is on the top surface of the focusing bracket of the surface form and the central point of the focusing structure integrated with the focusing bracket of the surface form is at the focus of the top optical curved surface of the focusing bracket of the surface form.

The favorable effects of the present invention are as follows:
1. In the present invention, the component that is difficult to process and requires polishing and plating is broken down into a condensing film and a surface form baseplate. The components that are broken down feature convenient processing and low cost.
2. In the present invention, the surface that is difficult to process is broken down into a surface form baseplate and a focusing bracket of the surface form, wherein the surface form is made into a thin plate and only the top surface of the focusing bracket of the surface form is made into an accurate surface required by condensing. The focusing bracket of the surface form broken down can be accurately processed, which can ensure the soft surface form baseplate is attached to the top surface of the focusing bracket of the surface form and reproduces its surface shape, realizing a surface form featuring convenient processing and low cost.
3. In the present invention, the difficulty in accurate and repeated focusing is overcome by combining the focusing structure and the focusing bracket of the surface form onto a modular part.

The successful solving of the three problems above makes the reflecting and condensing utilization of the solar energy reach a level of being applicable to large-scale generalization.

In the embodiments of the present invention, a collector tube 1 is arranged on the condensing device of the present invention to make it as the condensing focus, thus a large amount of solar energy can be condensed and the heat quantity of the solar energy condensed is 6 to 9 times more than that condensed only with collector tubes, reaching the aim of collecting more heat and heating water to a higher temperature (approximate to 100°C) so that solar hot water can be used not only for bathing but also for heating and the utilization of solar hot water is pushed onto a new higher stage.

### BRIEF DESCRIPTION OF THE DIFFERENT VIEWS OF THE

### DRAWINGS

FIG. 1 is a stereogram of the present invention;
FIG. 2 is a front view of FIG. 1;
FIG. 3 is Section A-A of FIG. 2;
FIG. 4 is a section of the structure of the planar film with reflecting plating;
FIG. 5 is a schematic diagram of the structure of the focusing bracket of the surface form;
FIG. 6 is a schematic diagram of the structure of the microprism total-reflection condensing film, in which the optical path of the total reflection of the sun ray on the prism is shown.

### "Explanation of the Main Numbers in the Drawings"

1: collector tube; 2: condensing film; 2a: planar film with reflecting plating; 2b: microprism total-reflection condensing film; 3: surface form baseplate; 4: focusing bracket of the surface form baseplate; 4a: top optical curved surface of the focusing bracket of the surface form; 4b: focusing structure integrated with the focusing bracket of the surface form; 6: adhesive; 7: transparent plastic film; 8: reflecting plating; 9: protection film layer; 11: first plane; 12: digital curved surface; 14: second plane; i1, i2, i3: incident rays; r1, r2, r3: reflected rays; f: focus.

### DETAILED DESCRIPTION OF THE INVENTION

The present invention will be further illustrated hereinafter in conjunction with the drawings:

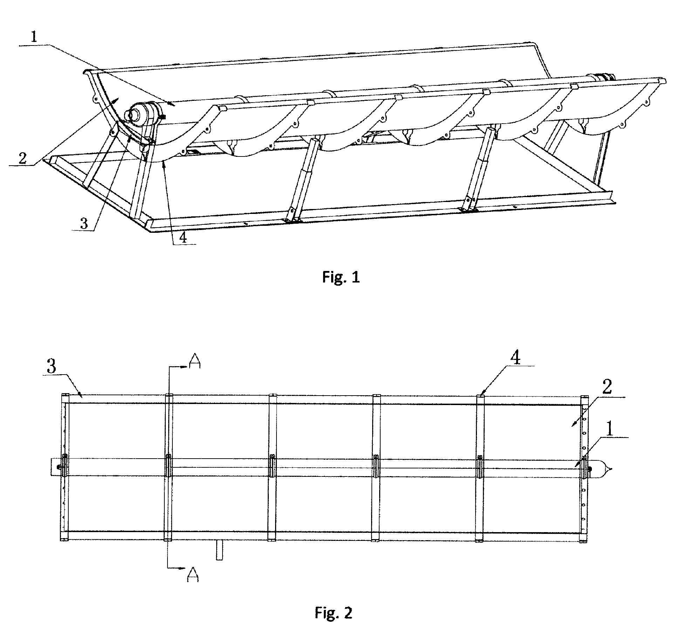

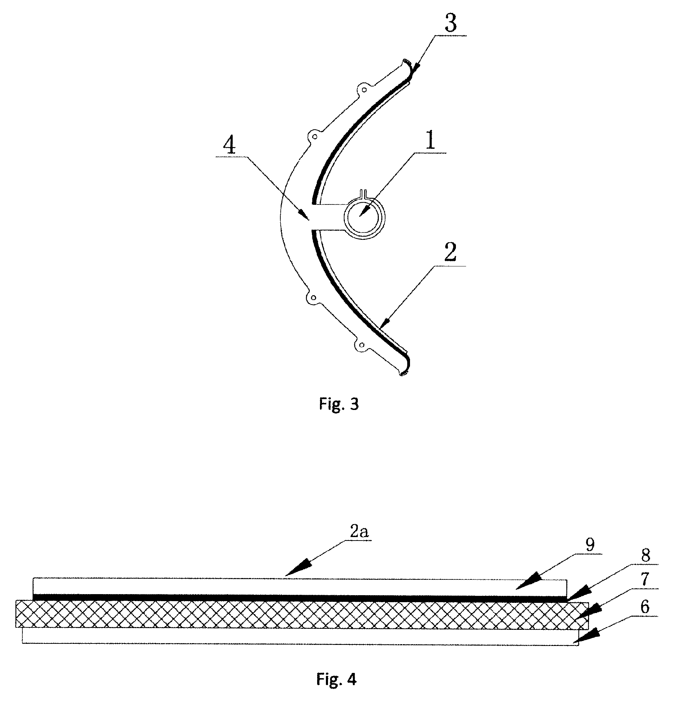

FIG. 1 is a stereogram of the present invention; FIG. 2 is a front view of FIG. 1; FIG. 3 is Section A-A of FIG. 2;

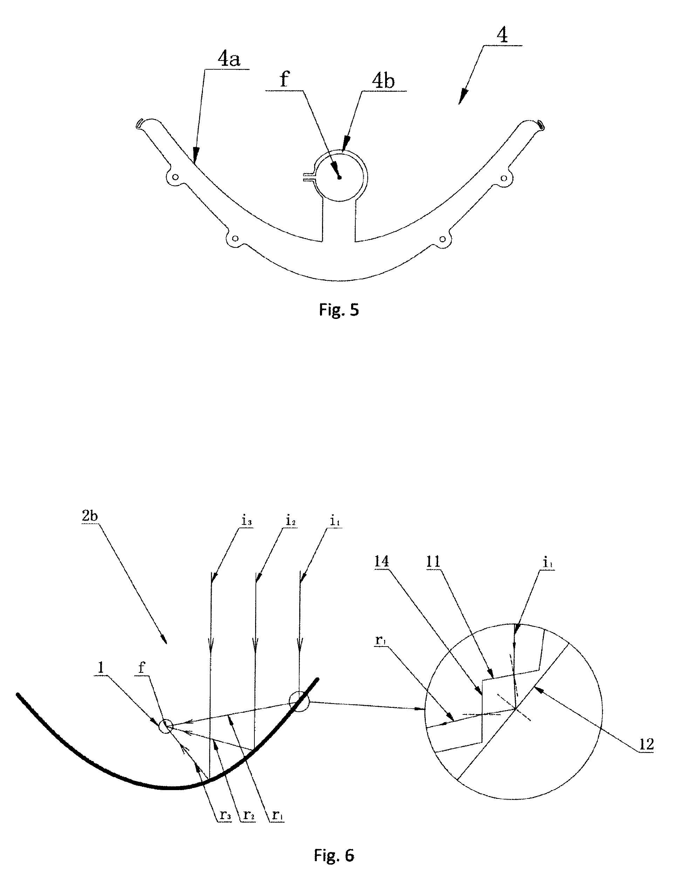

FIG. 4 is a section of the structure of the planar film with reflecting plating; FIG. 5 is a schematic diagram of the structure of the focusing bracket of the surface form; FIG. 6 is a schematic diagram of the structure of the microprism total-reflection condensing film, in which the optical path of the total reflection of the sun ray on the prism is shown.

### Embodiment 1

The present invention provides a film solar reflecting and condensing device, including a condensing film 2, a surface form baseplate 3 and a focusing bracket of the surface form 4.

As shown in FIG. 1, FIG. 2 and FIG. 3, the condensing film 2 is a planar film 2a with reflecting plating which is set on the top surface of the surface form baseplate 3; the surface form baseplate 3 is a thin plate whose bottom surface is attached to the top surface of the focusing bracket 4 of the surface form and reproduces its surface shape.

The focusing bracket 4 of the surface form includes: a top optical curved surface 4a of the focusing bracket of the surface form and a focusing structure 4b integrated with the focusing bracket of the surface form. The top optical curved surface 4a of the focusing bracket of the surface form is on the top surface of the focusing bracket 4 of the surface form and the central point of the focusing structure 4b integrated with the focusing bracket of the surface form is at the focus f of the top optical curved surface 4a of the focusing bracket of the surface form.

As shown in FIG. 4, the structure of the planar film 2a with reflecting plating is as follows: one side of a transparent plastic film 7 is plated with a reflecting plating 8 which is coated with a protection film layer 9; the other side of the transparent plastic film 7 is coated with adhesive 6.

If the condensing film 2 is a planar film 2a with reflecting plating, the shape of the surface form baseplate 3 is a paraboloid.

If the condensing film 2 is a planar film 2a with reflecting plating, the top optical curved surface 4a of the focusing bracket of the surface form is a parabolic cylinder surface; the top optical curved surface 4a of the focusing bracket of the surface form and the focusing structure 4b integrated with the focusing bracket of the surface form to form a whole structure or is the mechanical connection structure of accurate positioning.

The present invention also includes a collector tube 1 whose center coincides with the central point of the focusing structure 4b integrated with the focusing bracket of the surface form.

The manufacturing process of Embodiment 1 of the present invention is as follows:
In the present invention, firstly make the top surface into a focusing bracket 4 of the surface form with an accurate paraboloid, and then attach a surface form baseplate less than 0.5mm in thickness to the top surface of the focusing bracket 4 of the surface form, which can ensure the soft surface form baseplate 3 accurately reproduces the upper paraboloid shape of the focusing bracket 4 of the surface form; afterwards, conglutinate the condensing film 2a with reflecting plating evenly on the upper surface of the surface form baseplate 3 and insert the collector tube 1 into the hole of the focusing structure 4b integrated with the focusing bracket of the surface form and on the focusing bracket 4 of the surface form; thus a film solar reflecting and condensing device according to the present invention is completed.

### Embodiment 2

The present invention provides a film solar reflecting and condensing device, including a condensing film 2, a surface form baseplate 3 and a focusing bracket of the surface form 4.

As shown in FIG. 1, FIG. 2 and FIG. 3, the condensing film 2 is a microprism total-reflection condensing film 2b which is set on the top surface of the surface form baseplate 3; the surface form baseplate 3 is a thin plate whose bottom surface is attached to the top surface of the focusing bracket 4 of the surface form and reproduces its surface shape; the focusing bracket 4 of the surface form includes: a top optical curved surface 4a of the focusing bracket of the surface form and a focusing structure 4b integrated with the focusing bracket of the surface form, wherein the top optical curved surface 4a of the focusing bracket of the surface form is on the top surface of the focusing bracket 4 of the surface form and the central point of the focusing structure 4b integrated with the focusing bracket of the surface form is at the focus f of the top optical curved surface 4a of the focusing bracket of the surface form.

As shown in FIG. 6, the structure of the microprism total-reflection condensing film 2b is as follows: form multiple tiny prisms on the surface of the transparent plastic film.

If the condensing film 2 is the microprism total-reflection condensing film 2b, the shape of the surface form baseplate 3 meet the following requirements: it not only enables the prisms on the microprism total-reflection condensing film 2b to meet the total reflection conditions, but also ensures the reflected rays gather at the focus f.

If the condensing film 2 is the microprism total-reflection condensing film 2b, the top optical curved surface 4a of the focusing bracket of the surface form is a digital cylinder surface. The digital cylinder surface is as follows: incident rays i1, i2 and i3 parallel to the optical axis are reflected by the first plane 11 and then fall on the digital curved surface 12 which totally reflects the rays onto the second plane 14; the reflected rays r1, r2 and r3 refracted by the second plane 14 gather at the same focus f.

The present invention also includes a collector tube 1 whose center coincides with the central point of the focusing structure 4b integrated with the focusing bracket of the surface form.

The manufacturing process of Embodiment 2 of the present invention is as follows:
In the present invention, firstly make the top surface into a focusing bracket 4 of the surface form of an accurate digital curved surface 12, and then attach a surface form baseplate 3 less than 0.5mm in thickness to the top surface of the focusing bracket 4 of the surface form, which can ensure the soft surface form baseplate 3 accurately reproduces the upper digital curved surface 12 of the focusing bracket 4 of the surface form, afterwards, conglutinate the microprism total-reflection condensing film 2b evenly on the upper surface of the surface form baseplate 3 and insert the collector tube 1 into the hole of the focusing structure 4b integrated with the focusing bracket of the surface form and on the focusing bracket 4 of the surface form, thus a film solar reflecting and condensing device according to the present invention is completed.

## Claims

1. A film solar reflecting and condensing device, **characterized by** the following, including: a condensing film (2), a surface form baseplate (3) and a focusing bracket (4) of the surface form, wherein the condensing film (2) is a planar film (2a) with reflecting plating which is set on the top surface of the surface form baseplate (3); the surface form baseplate (3) is a thin plate whose bottom surface is attached to the top surface of the focusing bracket (4) of the surface form and reproduces its surface shape; the focusing bracket (4) of the surface form includes: a top optical curved surface (4a) of the focusing bracket (4) of the surface form and a focusing structure (4b) integrated with the focusing bracket of the surface form, wherein the top optical curved surface (4a) of the focusing bracket of the surface form is on the top surface of the focusing bracket (4) of the surface form and the central point of the focusing structure (4b) integrated with the focusing bracket of the surface form is at the focus (f) of the top optical curved surface (4a) of the focusing bracket of the surface form.

2. The film solar reflecting and condensing device as claimed in Claim 1, **characterized in that** the structure of the planar film (2a) with reflecting plating is as follows: one side of a transparent plastic film (7) is plated with a reflecting plating (8) which is coated with a protection film layer (9); the other side of the transparent plastic film (7) is coated with adhesive (6).

3. The film solar reflecting and condensing device as claimed in Claim 1, **characterized in that** the shape of the surface form baseplate (3) is a paraboloid.

4. The film solar reflecting and condensing device as claimed in Claim 1, **characterized in that** the top optical curved surface (4a) of the focusing bracket of the surface form is a parabolic cylinder surface; the top optical curved surface (4a) of the focusing bracket of the surface form and the focusing structure (4b) integrated with the focusing bracket of the surface form combine to form a whole structure or is the mechanical connection structure of accurate positioning.

5. A film solar reflecting and condensing device, **characterized by** the following, including: a condensing film (2), a surface form baseplate (3) and a focusing bracket (4) of the surface form, wherein the condensing film (2) is a microprism total-reflection condensing film (2b) which is set on the top surface of the surface form baseplate (3); the surface form baseplate (3) is a thin plate whose bottom surface is attached to the top surface of the focusing bracket (4) of the surface form and reproduces its surface shape; the focusing bracket (4) of the surface form includes: a top optical curved surface (4a) of the focusing bracket of the surface form and a focusing structure (4b) integrated with the focusing bracket of the surface form, wherein the top optical curved surface (4a) of the focusing bracket of the surface form is on the top surface of the focusing bracket (4) of the surface form and the central point of the focusing structure (4b) integrated with the focusing bracket of the surface form is at the focus (f) of the top optical curved surface (4a) of the focusing bracket of the surface form.

6. The film solar reflecting and condensing device as claimed in Claim 5, **characterized in that** the structure of the microprism total-reflection condensing film 2b is as follows: form multiple tiny prisms on the surface of the transparent plastic film.

7. The film solar reflecting and condensing device as claimed in Claim 5, **characterized in that** the shape of the surface form baseplate (3) meets the following requirements: it not only enables the prisms on the microprism total-reflection condensing film (2b) to meet the total reflection conditions, but also ensures the reflected rays gather at the focus (f).

8. The film solar reflecting and condensing device as claimed in Claim 5, **characterized in that** the top optical curved surface (4a) of the focusing bracket of the surface form is a digital cylinder surface which is as follows: incident rays (i1, i2 and i3) parallel to the optical axis are reflected by the first plane (11) and then fall onto the digital curved surface (12) which totally reflects the rays onto the second plane (14); the reflected rays (r1, r2 and r3) refracted by the second plane (14) gather at the same focus (f).

9. The film solar reflecting and condensing device as claimed in any one of Claim 1 to Claim 5, **characterized in that** it also includes a collector tube (1) whose center coincides with the central point of the focusing structure (4b) integrated with the focusing bracket of the surface form.
